# EUROPÄISCHE PATENTSCHRIFT

(11) **EP 2 623 828 B1**
(45) Veröffentlichungstag und Bekanntmachung des Hinweises auf die Patenterteilung: **31.12.2014**
(21) Anmeldenummer: 13153380.4
(22) Anmeldetag: 31.01.2013
(51) Int. Cl.: F16K 31/60, F16K 11/078

(54) **Sanitärventil**
Sanitary valve
Robinet

(30) Priorität: 02.02.2012 DE 102012201543
(43) Veröffentlichungstag der Anmeldung: 07.08.2013
(73) Patentinhaber: Hansgrohe SE, 77761 Schiltach (DE)
(72) Erfinder: Hahn, Arno, 77761 Schiltach (DE)
(74) Vertreter: Patentanwälte Ruff, Wilhelm, Beier, Dauster & Partner

(56) Entgegenhaltungen:
- EP-A1- 0 701 077
- EP-A2- 0 311 546
- EP-A2- 1 108 931
- DE-A1- 2 815 990
- DE-A1- 19 509 174
- DE-A1-102005 001 303

## Beschreibung

Die Erfindung geht aus von einem Sanitärventil, beispielsweise einer Mischarmatur, vgl. dazu EP-A-311 546 oder auch EP-A-1 108 931.

Bei Mischarmaturen kann der Drehwinkel des Einstellorgans des Thermostaten linear zur eingestellten Temperatur sein. Es ist jedoch auch möglich, dass man in bestimmten Temperaturbereichen eine stärkere Spreizung wünscht, beispielsweise um im warmen Bereich die Temperatur genauer einstellen zu können.

Wenn man die Temperatur genauer einstellen möchte, kann es erforderlich sein, bei einer Verstellung durch Verdrehung einen Verstellbereich über eine volle Umdrehung vorzusehen. Gegebenenfalls können auch Verstellbereiche von mehr als 360° gewünscht werden.

Bei einem feststehenden Anschlag, mit dem ein Griffanschlag zusammenwirkt, ist der Verstellbereich immer kleiner als 360°. Je näher man an diesen Winkel herankommt, desto schmaler wird der Anschlag.

Es ist bereits ein sanitäres Verteilerventil bekannt, mit dessen Hilfe mehrere Auslässe angesteuert werden können. Durch Anbringen eines Anschlags kann ein bestimmter Auslass aus dem Ventil gesperrt werden, falls dieser Auslass aus dem Ventil nicht benötigt wird (DE 10 2005 001 303 A1).

Weiterhin ist ein Einhebelmischventil bekannt, das einen in unterschiedlichen Orientierungen aufsteckbaren Anschlagring aufweist, der damit die Öffnung des Ventils in Richtung zunehmender und gegebenenfalls abnehmender Temperatur begrenzt (DE 28 15 990 A1).

Der Erfindung liegt die Aufgabe zu Grunde, eine Möglichkeit zu schaffen, bei einem Sanitärventil mit einer durch Drehung betätigten Verstellung einen Verstellbereich von 360° und gegebenenfalls mehr zu ermöglichen, ohne einen zur Betätigung des Sanitärventils erforderlichen Griff ändern zu müssen.

Zur Lösung dieser Aufgabe schlägt die Erfindung ein Sanitärventil mit den im Anspruch 1 genannten Merkmalen vor. Weiterbildungen der Erfindung sind Gegenstand von Unteransprüchen.

Durch das Zusammenwirken des Zwischenanschlags einerseits mit dem gehäusefesten Anschlag, im folgenden auch vereinfacht Gehäuseanschlag genannt, und andererseits mit dem dem Griff zugeordneten Anschlag, lässt sich ohne Änderung des Griffs ein Verstellbereich von 360° und auch mehr erreichen, ohne dass die Anschläge selbst zu schwach werden müssen, so dass die Stabilität auch bei Verwendung von Kunststoff als Material für den Zwischenanschlag erhalten bleibt.

In Weiterbildung der Erfindung kann vorgesehen sein, dass der gehäusefeste Anschlag mindestens zwei Anschlagsausbildungen aufweist. Die eine Anschlagsausbildung ist für die Begrenzung der Rechtsdrehung und die andere für die Begrenzung der Linksdrehung bestimmt.

Erfindungsgemäß kann dann auch der Griffanschlag zwei Anschlagsausbildungen aufweisen.

Dementsprechend kann erfindungsgemäß vorgesehen sein, dass der Zwischenanschlag je zwei Anschlagsausbildungen aufweist, von denen ein Paar für das Zusammenwirken mit dem Gehäuseanschlag und das andere Paar für den Griffanschlag bestimmt ist.

In nochmaliger Weiterbildung der Erfindung kann vorgesehen sein, dass der gehäusefeste Anschlag in einer Vertiefung in der Stirnfläche des Gehäuses des Sanitärventils ausgebildet ist, durch die das Verstellelement herausragt.

Insbesondere kann vorgesehen sein, dass die Vertiefung die Form eines Kreiszylinders aufweist, vorzugsweise mit einem ebenen Boden. Der Kreiszylinder weist mindestens eine Nische auf, deren Seitenwände die Anschlagsausbildung bilden.

In dieser Vertiefung kann in Weiterbildung der Zwischenanschlag angeordnet und gelagert sein.

Insbesondere kann in Weiterbildung vorgesehen sein, dass der Zwischenanschlag die Form einer flachen Scheibe mit mindestens einem radialen Vorsprung aufweist. Die Dicke der flachen Scheibe kann beispielsweise der Tiefe der Vertiefung entsprechen. Natürlich hat diese flache Scheibe in der Mitte eine Öffnung, durch die das Verstellelement hindurchragen kann. Vorzugsweise kann der Durchmesser der Scheibe dem Durchmesser der Vertiefung entsprechen. Dadurch bildet die Wand der Vertiefung die Lagerung zur Verdrehung der Scheibe. Der radiale Vorsprung greift in die Nische ein, und seine in Umfangsrichtung gerichteten Seiten bilden die Anschlagsausbildung des Zwischenanschlags. Sie können insbesondere in ihrer Größe und ihrer Form den Seitenwänden der Nische entsprechen.

Da der Zwischenanschlag je nach gewünschtem Verstellbereich unter Umständen nur um einen kleinen Winkel verdreht zu werden braucht, kann erfindungsgemäß zu Vergrößerung der Stabilität vorgesehen sein, dass die Vertiefung mehrere Nischen und die Scheibe mehrere Vorsprünge aufweist.

Zum Zusammenwirken mit dem Griffanschlag kann die Scheibe einen axial gerichteten Vorsprung aufweisen, der die Anschlagsausbildungen zum Zusammenwirken mit dem Griffanschlag bildet.

Vorzugsweise ist dieser Vorsprung an der gleichen Stelle an der Scheibe angeordnet wie einer der Vorsprünge für den Gehäuseanschlag. Beispielsweise kann einer der radialen Vorsprünge der Scheibe an seinem Ende nach oben abgebogen sein.

Der dem Griff zugeordnete Griffanschlag kann im Prinzip auch mit dem Griff verbunden sein. Die Erfindung schlägt jedoch vor, dass der Griffanschlag drehfest an dem Verstellelement angeordnet sein kann.

Erfindungsgemäß kann in Weiterbildung vorgesehen sein, dass der Griffanschlag als flache, insbesondere ebene Platte ausgebildet ist und einen radialen Vorsprung aufweist, der in der gleichen Ebene liegt wie die Platte selbst und dessen in Umfangsrichtung gerichtete Seiten die Anschlagsausbildungen des Griffanschlags bilden.

Erfindungsgemäß kann vorgesehen sein, dass die den Griffanschlag bildende Platte auf dem Zwischenanschlag aufliegt.

Es ist aber ebenfalls möglich und liegt im Rahmen der Erfindung, dass der Zwischenanschlag an dem Griffanschlag gelagert ist.

In nochmaliger Weiterbildung der Erfindung kann vorgesehen sein, dass alle Anschlagelemente in der gleichen Ebene angeordnet sind.

Erfindungsgemäß kann vorgesehen sein, dass der gehäusefeste Anschlag als ein in ein Langloch des Zwischenanschlags eingreifender Zapfen ausgebildet ist, oder aber umgekehrt als Ausnehmung ausgebildet ist, in die ein mit dem Zwischenanschlag verbundener mit diesem mitbewegter Zapfen eingreift.

Die zusätzliche Bewegungsfreiheit für das Verstellelement wird in dem Zwischenanschlag bzw. durch den Zwischenanschlag vorgesehen. Dabei kann die Mitnahme zwischen dem Griffanschlag und dem Zwischenanschlag sowohl durch radiale als auch durch axiale Vorsprünge bzw. radiale oder axiale Vertiefungen verwirklicht werden. Das gleiche gilt für die Eingriffe zwischen dem Zwischenanschlag und dem gehäusefesten Anschlag.

Insbesondere schlägt die Erfindung vor, dass das Sanitärventil als Kartusche zum Einsetzen in eine Sanitärarmatur ausgebildet sein kann.

Der vergrößerte Verstellbereich des Verstellelements ist besonders sinnvoll, wenn mit dem Verstellelement eine Temperatur eingestellt werden soll.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: perspektivisch einen Teil eines Sanitärventils nach der Erfindung;
- Figur 2: die Draufsicht auf das Stirnende des Sanitärventils;
- Figur 3: die Draufsicht auf den Zwischenanschlag;
- Figur 4: den Griffanschlag;
- Figur 5: einen Querschnitt durch das obere Ende des Sanitärventils;
- Figur 6: die Position des Verstellelements am einen Ende des Verstellbereichs;
- Figur 7: die Position des Verstellelements in der Mitte des Verstellbereichs;
- Figur 8: die Position des Verstellelements an dem anderen Ende des Verstellbereichs;
- Figur 9: eine der Figur 1 entsprechende Darstellung einer zweiten Ausführungsform;
- Figur 10: einen Schnitt durch die Ausführungsform der Figur 9;
- Figur 11: die perspektivische Ansicht der Ventilkartusche;
- Figur 12: eine schematische Darstellung einer weiteren Ausführungsform;
- Figur 13: eine der Figur 12 entsprechende Darstellung einer weiteren Ausführungsform.

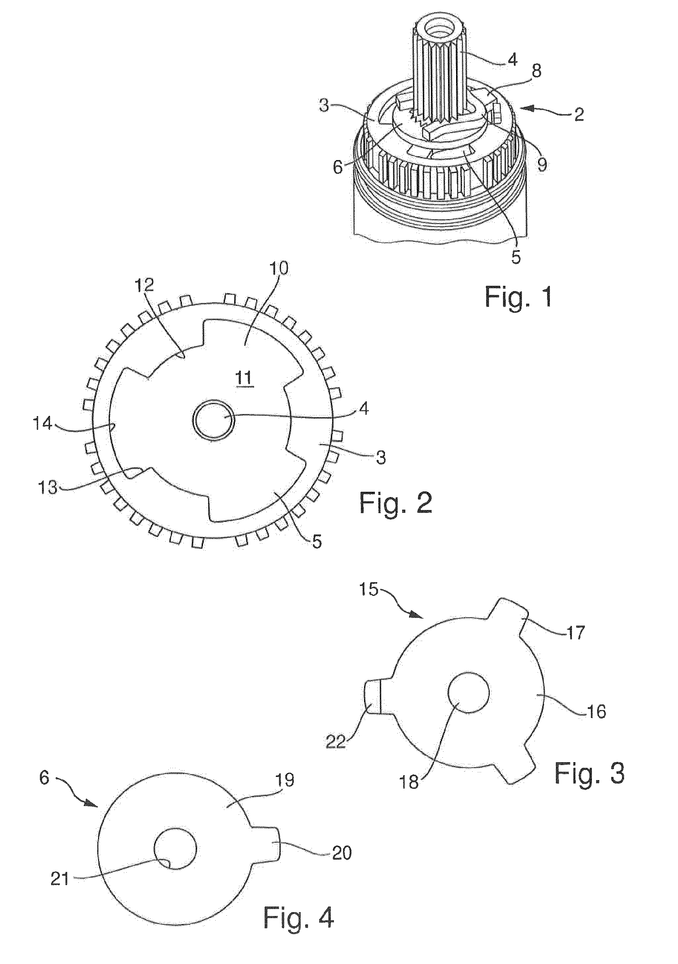

Die Figur 1 zeigt perspektivisch das Ende eines Sanitärventils. In einer Sanitärarmatur 1 ist eine Kartusche 2 eingesetzt, die ein Sanitärventil bildet. Das Gehäuse dieser Kartusche 2 enthält eine Stirnfläche 3, aus der das Verstellelement 4 herausragt. In der Stirnfläche 3 ist eine Vertiefung angeordnet, die Nischen 5 bildet. In der Vertiefung ist ein Zwischenanschlag angeordnet, der in Figur 1 nicht zu sehen ist. Auf diesem Zwischenanschlag ruht eine den Griffanschlag 6 bildende Scheibe 7 auf, die an der Seite hinten rechts in Figur 1 einen radialen Vorsprung 8 enthält. Oberhalb der den Griffanschlag 6 bildenden Scheibe 7 ist in einer umlaufenden Nut des Verstellelements eine Klammer 9 eingesetzt, die den Griffanschlag 6 in axialer Richtung sichert. Der Griffanschlag 6 greift in eine Verzahnung des Verstellelements 4 ein und ist dadurch drehfest mit dem Verstellelement 4 verbunden.

Zur besseren Erläuterung der Einzelteile wird jetzt auf die folgenden Figuren 2 bis 5 verwiesen. Hier zeigt die Figur 2 in einem gegenüber der Figur 1 vergrößertem Maßstab eine schematische Ansicht der Kartusche von oben, ohne die verschiedenen zusätzlichen in Figur 1 dargestellten Teile. In der Stirnfläche 3 ist die bereits erwähnte Vertiefung 10 ausgebildet. Die Vertiefung 10 enthält einen Boden 11, der im dargestellten Beispiel eben ausgebildet ist. In der Mitte des Bodens 11 ragt die schematisch angedeutete Drehspindel 4 heraus. Die Vertiefung 10 hat die Grundform eines Kreiszylinders mit in Draufsicht auf einem Kreisbogen liegenden Wänden 12. An drei gleichmäßig über den Umfang verteilten Stellen sind in den Wänden 12 Nischen 5 gebildet, die etwa radial verlaufende Seitenwände 13 und eine konzentrische Außenwand 14 aufweisen.

In diese Vertiefung 10 wird der Zwischenanschlag 15 eingelegt, der als Platte 16 mit drei Vorsprüngen 17 ausgebildet ist. Der Durchmesser der kreisförmigen Platte 16 entspricht dem Durchmesser des Kreiszylinders, der die Grundform der Vertiefung 10 bildet. Die radiale Erstreckung der Vorsprünge 17 entspricht etwa der radialen Erstreckung der Nischen 5. In der Mitte enthält die Platte 16 ein Loch 18, durch das in zusammengesetztem Zustand das Verstellelement 4 hindurch ragt.

Zu der Einrichtung gehört noch der Griffanschlag 6, der in Draufsicht in Figur 4 dargestellt ist. Er ist ebenfalls als kreisförmige Platte 7 mit einem radialen Vorsprung 20 ausgebildet. Die Öffnung 21 in der Mitte ist hier vereinfacht als Kreis dargestellt, sie ist tatsächlich gezackt, damit die drehfeste Verbindung mit dem Verstellelement 4 erfolgen kann.

Die den Zwischenanschlag 15 bildende Platte 16 wird in die Vertiefung 10 eingelegt. Dabei liegt jeder der Vorsprünge 17 in einer Nische 5. Die Nischen 5 definieren zusammen mit den Vorsprüngen 17 die Verdrehbarkeit des Zwischenanschlags gegenüber dem Gehäuse des Sanitärventils. Auf das Verstellelement wird dann der Griffanschlag 6 aufgeschoben und soweit nach unten geschoben, bis er auf der Platte 16 aufliegt. Anschließend erfolgt die Sicherung durch das Aufschieben der Klammer 9 in die Nut des Verstellelements 4.

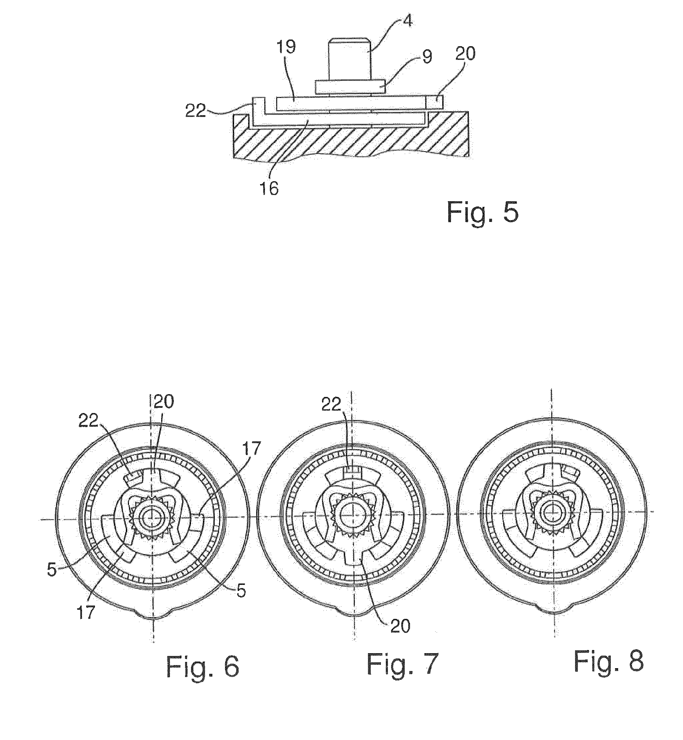

Diese Situation ist in Figur 5 vereinfacht dargestellt. Einer der Vorsprünge 17 des Zwischenanschlags 15 ist an seinem Ende nach oben gebogen und bildet dort einen Anschlag 22, der in der Ebene des Griffanschlags 6 liegt.

Zur Wirkungsweise wird nun auf die Figuren 6 bis 8 verwiesen. In Figur 6 ist das Verstellelement 4 im Gegenuhrzeigersinn so weit verdreht, wie dies durch die verschiedenen Anschläge möglich ist. Die Vorsprünge 17 liegen in ihrer jeweiligen Nische 5 an deren Seitenwand 13 an. Gleichzeitig liegt der Vorsprung 20 des Griffanschlags 6 an der Seitenwand des nach oben gerichteten Vorsprungs 22 des Vorsprungs 17 an. Dadurch ist die Weiterdrehung verhindert.

Die Figur 7 zeigt die Situation, die nach Verdrehen des Verstellelements um 180° entsteht. Der Vorsprung 20 des Griffanschlags 6 ist um 180° verdreht worden. Die Position des Zwischenanschlags ist hier unerheblich.

Bei einer nochmaligen Verdrehung des Verstellelements im Uhrzeigersinn um 180° wird der Zwischenanschlag ebenfalls im Uhrzeigersinn verdreht, bis jetzt die Vorsprünge 17 an der jeweils gegenüberliegenden Seitenwand 13 jeder Nische 5 zur Anlage kommen. Damit ist das Verstellelement um 360° verstellt worden.

Im dargestellten Beispiel bei einer gewünschten maximalen Verstellung um 360° ist die Umfangserstreckung jeder Nische 5 gleich der Summe aus der Umfangserstreckung des Vorsprungs 20 des Griffanschlags 6 und der doppelten Umfangserstreckung der Vorsprünge 17.

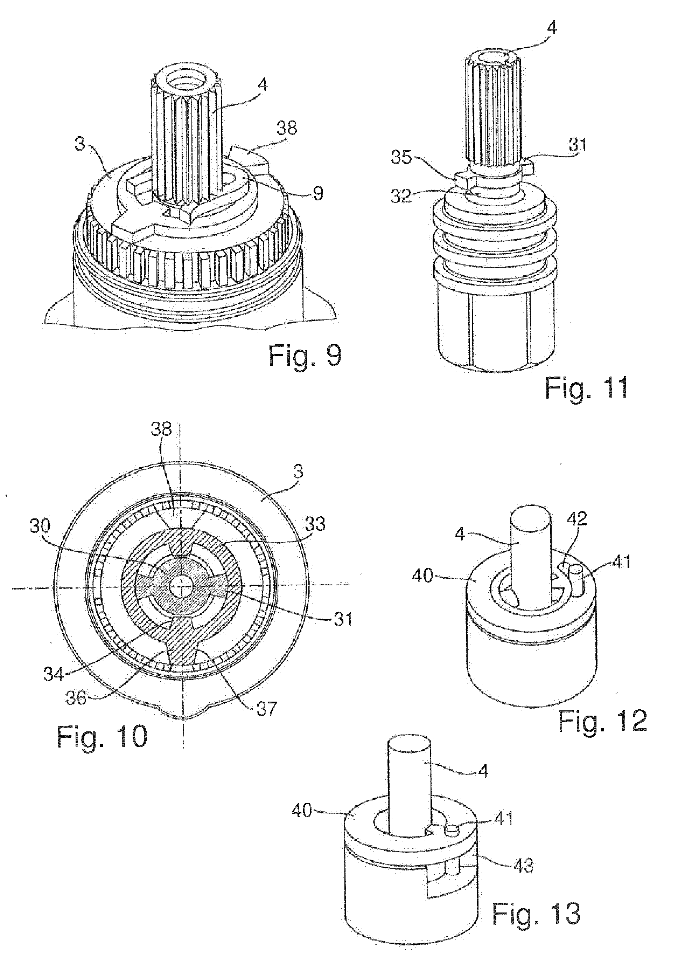

Nun zu der Ausführungsform, die in den Figuren 9 bis 11 teilweise vereinfacht dargestellt ist. Während bei der vorhergehenden Ausführungsform der Zwischenanschlag in einer Vertiefung der Stirnfläche 3 des Gehäuses angeordnet und an seiner radialen Außenseite gelagert ist, zeigt die Ausführungsform nach den Figuren 9 bis 11 eine andere Möglichkeit. Die Figur 11 zeigt zunächst nur einen Teil des Sanitärventils, nämlich mit einem an dem drehbaren Verstellelement 4 angebrachten Ring 30 mit zwei diametral angeordneten Vorsprüngen 31. Die in Umfangsrichtung zeigenden Seitenflächen 32 bilden Anschlagsausbildungen, und der Ring 30 stellt zusammen mit den Vorsprüngen 31 den Griffanschlag dar.

In zusammengesetztem Zustand liegt in der gleichen Ebene wie der Ring 30 mit den Vorsprüngen 31 ein weiterer Ring 33, der zwei nach innen gerichtete Vorsprünge 34 aufweist. Die freien Stirnkanten der Vorsprünge 34 liegen an der Außenseite des Rings 30 an, und die radial äußeren Stirnkanten 35 der Vorsprünge 31 des Rings 30 liegen an der Innenseite des Rings 33 an. Der Ring 33 ist daher an dem Griffanschlag gelagert.

Der Ring 33 bildet den Zwischenanschlag. Er weist an seiner radialen Außenseite einen Vorsprung 36 auf, der zwei seitliche Anschlagsausbildungen 37 aufweist.

Die Figur 10 zeigt eine mittlere Position sowohl des Griffanschlags 30 als auch des Zwischenanschlags 33. Der Gehäuseanschlag wird von einem axialen Vorsprung 38 gebildet, gegen den bei Verdrehung der Vorsprung 36 des Zwischenanschlags zur Anlage kommt.

Verdreht man das Verstellelement 4 in Figur 9 und 10 in Uhrzeigersinn, so verdreht sich zunächst nur der Ring 30, bis seine Vorsprünge 31 zur Anlage an den inneren Vorsprüngen des Zwischenanschlags gelangen. Beim Weiterdrehen wird der Zwischenanschlag zusammen mit dem Griffanschlag verdreht, bis sein Vorsprung 36 an dem Gehäuseanschlag 38 zur Anlage kommt.

Bei der gerade behandelten Ausführungsform liegen alle drei Anschläge in einer Ebene. Sie liegen auf der Stirnfläche 3 des Gehäuses auf. Die axiale Sicherung erfolgt wieder durch die Klammer 9.

Die Figur 12 zeigt vereinfacht eine Ausführungsform, bei der der Zwischenanschlag 40 in Form einer Scheibe an dem Verstellelement 4 gelagert ist. Aus der Stirnfläche des Gehäuses ragt ein Zapfen 41 heraus, der in einem gekrümmten Langloch 42 des Zwischenanschlags 40 aufgenommen ist. Dadurch kann der Zwischenanschlag 40 um einen durch das Langloch 42 bestimmten Winkel verdreht werden. Bei der Figur 12 ist der Griffanschlag nicht dargestellt. Er könnte aber dem Griffanschlag der Ausführungsform nach Figur 9 bis 11 entsprechen.

Die Figur 13 zeigt eine Änderung gegenüber Figur 12, nämlich die Anordnung des Zapfens 41 in dem Zwischenanschlag 40. Bei Verdrehung bewegt sich der Zapfen 41 in einer Ausnehmung 43 in der Stirnfläche des Gehäuses.

## Patentansprüche

1. Sanitärventil, mit
1.1 einem Gehäuse, das
1.2 mindestens einen gehäusefesten Anschlag aufweist,
1.3 einem aus dem Gehäuse herausragenden gegenüber dem Gehäuse verdrehbaren Verstellelement (4),
1.4 einem dem Verstellelement (4) zugeordneten mit diesem verdrehbaren Griffanschlag (6), sowie mit
1.5 einem Zwischenanschlag (15), der
1.6 an dem Gehäuse oder dem Verstellelement (4) verdrehbar gelagert ist und
1.7 mit dem gehäusefesten Anschlag zur Begrenzung seiner Verdrehbarkeit gegenüber dem Gehäuse zusammenwirkt, **dadurch gekennzeichnet, dass** der Zwischenanschlag auch
1.8 mit dem Griffanschlag (6) zur Begrenzung der Verdrehbarkeit des Verstellelements (4) gegenüber dem Zwischenanschlag (15) zusammenwirkt.

2. Sanitärventil nach Anspruch 1, bei dem der gehäusefeste Anschlag mindestens zwei Anschlagsausbildungen, der Griffanschlag (6) mindestens zwei Anschlagsausbildungen und der Zwischenanschlag (15) mindestens je zwei Anschlagsausbildungen aufweist.

3. Sanitärventil nach Anspruch 1 oder 2, bei dem der gehäusefeste Anschlag an/in einer Stirnfläche (3) des Gehäuses ausgebildet ist, durch die das Verstellelement (4) herausragt.

4. Sanitärventil nach einem der vorhergehenden Ansprüche, bei dem der gehäusefeste Anschlag in einer Vertiefung (10) der Stirnfläche (3) des Gehäuses ausgebildet ist, die die Form eines Kreiszylinders mit mindestens einer Nische (5) aufweist, deren Seitenwände (13) die Anschlagsausbildung des gehäusefesten Anschlags bilden.

5. Sanitärventil nach Anspruch 3 oder 4, bei dem der Zwischenanschlag (15) in der Vertiefung (10) angeordnet und gelagert ist.

6. Sanitärventil nach Anspruch 5, bei dem der Zwischenanschlag (15) die Form einer flachen Scheibe (16) mit mindestens einem radialen Vorsprung (17) aufweist, wobei der Durchmesser der Scheibe (16) dem Durchmesser der Vertiefung (10) entspricht und die in Umfangsrichtung gerichteten Seiten des Vorsprungs (17) den Seitenwänden (13) der Nische (5) entsprechen.

7. Sanitärventil nach einem der Ansprüche 4 bis 6, bei dem die Vertiefung (10) mehrere Nischen (5) und die Scheibe (16) mehrere Vorsprünge (17) aufweist.

8. Sanitärventil nach Anspruch 6 oder 7, bei dem der Zwischenanschlag (15) einen axial gerichteten Vorsprung (22) aufweist, der die Anschlagsausbildungen zum Zusammenwirken mit dem Griffanschlag (6) bildet.

9. Sanitärventil nach einem der vorhergehenden Ansprüche, bei dem der Griffanschlag (6) drehfest mit dem Verstellelement (4) verbunden ist.

10. Sanitärventil nach einem der vorhergehenden Ansprüche, bei dem der Griffanschlag (6) als flache, insbesondere ebene Platte (7) ausgebildet ist und einen radialen Vorsprung (20) aufweist, dessen in Umfangsrichtung gerichtete Seiten die Anschlagsausbildungen des Griffanschlags (6) bilden.

11. Sanitärventil nach Anspruch 10, bei dem die den Griffanschlag (6) bildende Platte (7) auf dem Zwischenanschlag (15) aufliegt.

12. Sanitärventil nach einem der vorhergehenden Ansprüche, bei dem der Zwischenanschlag an dem Griffanschlag gelagert ist.

13. Sanitärventil nach einem der vorhergehenden Ansprüche, bei dem alle Anschlagelemente in der gleichen Ebene angeordnet sind.

14. Sanitärventil nach einem der vorhergehenden Ansprüche, bei dem der gehäusefeste Anschlag als ein in ein Langloch (42) des Zwischenanschlags eingreifender Zapfen (41) und/oder als eine Ausnehmung (43) zur Aufnahme eines mit dem Zwischenanschlag bewegten Zapfens (41) ausgebildet ist.

15. Sanitärventil nach einem der vorhergehenden Ansprüche, als Kartusche zum Einsetzen in eine Sanitärarmatur ausgebildet und/oder als Mischarmatur ausgebildet.

## Claims

1. Sanitary valve, comprising
1.1. a housing, which
1.2 has at least one stop fixed to the housing,
1.3 an adjusting element (4), which projects out of the housing and is rotatable with respect to the housing,
1.4 a handle stop (6), which is assigned to the adjusting element (4) and is rotatable therewith, and also comprising
1.5 an intermediate stop (15), which
1.6 is mounted in a rotatable manner on the housing or the adjusting element (4) and
1.7 interacts with the stop fixed to the housing in order to limit its rotatability with respect to the housing, **characterized in that** the intermediate stop also
1.8 interacts with the handle stop (6) in order to limit the rotatability of the adjusting element (4) with respect to the intermediate stop (15).

2. Sanitary valve according to Claim 1, wherein the stop fixed to the housing has at least two stop formations, the handle stop (6) has at least two stop formations, and the intermediate stop (15) has at least in each case two stop formations.

3. Sanitary valve according to Claim 1 or 2, wherein the stop fixed to the housing is formed on/in an end face (3) of the housing, out of which the adjusting element (4) projects.

4. Sanitary valve according to any one of the preceding claims, wherein the stop fixed to the housing is formed in a depression (10) of the end face (3) of the housing, said depression (10) having the form of a circular cylinder having at least one niche (5), the side walls (13) of which form the stop formation of the stop fixed to the housing.

5. Sanitary valve according to Claim 3 or 4, wherein the intermediate stop (15) is arranged and mounted in the depression (10).

6. Sanitary valve according to Claim 5, wherein the intermediate stop (15) has the form of a flat disc (16) having at least one radial protrusion (17), the diameter of the disc (16) corresponding to the diameter of the depression (10), and the sides of the protrusion (17) which are directed in the circumferential direction correspond to the side walls (13) of the niche (5).

7. Sanitary valve according to any one of Claims 4 to 6, wherein the depression (10) has a plurality of niches (5) and the disc (16) has a plurality of protrusions (17).

8. Sanitary valve according to Claim 6 or 7, wherein the intermediate stop (15) has an axially directed protrusion (22) which forms the stop formation for interacting with the handle stop (6).

9. Sanitary valve according to any one of the preceding claims, wherein the handle stop (6) is connected in a rotationally fixed manner to the adjusting element (4).

10. Sanitary valve according to any one of the preceding claims, wherein the handle stop (6) is in the form of a flat, preferably planar, plate (7) and has a radial protrusion (20), the sides of which, which are directed in the circumferential direction, form the stop formations of the handle stop (6).

11. Sanitary valve according to Claim 10, wherein the plate (7) forming the handle stop (6) rests on the intermediate stop (15).

12. Sanitary valve according to any one of the preceding claims, wherein the intermediate stop is mounted on the handle stop.

13. Sanitary valve according to any one of the preceding claims, wherein all of the stop elements are arranged in the same plane.

14. Sanitary valve according to any one of the preceding claims, wherein the stop fixed to the housing is in the form of a pin (41) which engages in a slot (42) in the intermediate stop and/or in the form of a recess (43) for receiving a pin (41) that is moved with the intermediate stop.

15. Sanitary valve according to any one of the preceding claims, which is in the form of a cartridge for inserting into a sanitary fitting and/or in the form of a mixer fitting.

## Revendications

1. Soupape sanitaire, comprenant :
1.1 un boîtier qui
1.2 comprend au moins une butée fixée au boîtier,
1.3 un élément d'ajustement (4) faisant saillie hors du boîtier et pouvant tourner par rapport au boîtier,
1.4 une butées de poignée (6) associée à l'élément d'ajustement (4) et pouvant tourner avec celui-ci, et comprenant
1.5 une butée intermédiaire (15) qui
1.6 est montée à rotation sur le boîtier ou sur l'élément d'ajustement (4) et
1.7 coopère avec la butée fixée au boîtier pour limiter sa capacité de rotation par rapport au boîtier,
**caractérisée en ce que** la butée intermédiaire
1.8 coopère également avec la butée de poignée (6) pour limiter la capacité de rotation de l'élément d'ajustement (4) par rapport à la butée intermédiaire (15).

2. Soupape sanitaire selon la revendication 1, dans laquelle la butée fixée au boîtier comprend au moins deux formations de butée, la butée de poignée (6) comprend au moins deux formations de butée et la butée intermédiaire (15) comprend respectivement au moins deux formations de butée.

3. Soupape sanitaire selon la revendication 1 ou 2, dans laquelle la butée fixée au boîtier est réalisée sur/dans une surface frontale (3) du boîtier, à travers laquelle fait saillie l'élément d'ajustement (4).

4. Soupape sanitaire selon l'une quelconque des revendications précédentes, dans laquelle la butée fixée au boîtier est réalisée dans un évidement (10) de la surface frontale (3) du boîtier, lequel évidement présente la forme d'un cylindre circulaire comprenant au moins un renfoncement (5) dont les parois latérales (13) forment la formation de butée de la butée fixée au boîtier.

5. Soupape sanitaire selon la revendication 3 ou 4, dans laquelle la butée intermédiaire (15) est disposée et montée dans l'évidement (10).

6. Soupape sanitaire selon la revendication 5, dans laquelle la butée intermédiaire (15) présente la forme d'un disque plat (16) comprenant au moins une saillie radiale (17), le diamètre du disque (16) correspondant au diamètre de l'évidement (10) et les côtés de la saillie (17) orientés dans la direction périphérique correspondant aux parois latérales (13) du renfoncement (5).

7. Soupape sanitaire selon l'une quelconque des revendications 4 à 6, dans laquelle l'évidement (10) comprend plusieurs renfoncements (5) et le disque (16) comprend plusieurs saillies (17).

8. Soupape sanitaire selon la revendication 6 ou 7, dans laquelle la butée intermédiaire (15) comprend une saillie orientée axialement (22) qui forme les formations de butée pour la coopération avec la butée de poignée (6).

9. Soupape sanitaire selon l'une quelconque des revendications précédentes, dans laquelle la butée de poignée (6) est reliée de manière solidaire en rotation à l'élément d'ajustement (4).

10. Soupape sanitaire selon l'une quelconque des revendications précédentes, dans laquelle la butée de poignée (6) est réalisée sous forme de plaque (7) plate, en particulier plane, et comprend une saillie radiale (20) dont les côtés orientés dans la direction périphérique forment les formations de butée de la butée de poignée (6).

11. Soupape sanitaire selon la revendication 10, dans laquelle la plaque (7) formant la butée de poignée (6) repose sur la butée intermédiaire (15).

12. Soupape sanitaire selon l'une quelconque des revendications précédentes, dans laquelle la butée intermédiaire est montée sur la butée de poignée.

13. Soupape sanitaire selon l'une quelconque des revendications précédentes, dans laquelle tous les éléments de butée sont disposés dans le même plan.

14. Soupape sanitaire selon l'une quelconque des revendications précédentes, dans laquelle la butée fixée au boîtier est réalisée sous la forme d'une goupille (41) venant en prise dans un trou oblong (42) de la butée intermédiaire et/ou sous la forme d'une cavité (43) pour recevoir une goupille (41) déplacée avec la butée intermédiaire.

15. Soupape sanitaire selon l'une quelconque des revendications précédentes, réalisée sous forme de cartouche destinée à être insérée dans une robinetterie sanitaire et/ou sous forme de robinet mélangeur.
